# EUROPÄISCHE PATENTSCHRIFT

(11) **EP 3 190 438 B1**
(45) Veröffentlichungstag und Bekanntmachung des Hinweises auf die Patenterteilung: **01.07.2020**
(21) Anmeldenummer: 16204443.2
(22) Anmeldetag: 15.12.2016
(51) Int. Cl.: C03C 25/106, C03C 25/1065, C03C 25/14, B05D 3/06, B05D 3/04, G02B 6/02

(54) **VORRICHTUNG ZUM BESCHICHTEN EINER FASER SOWIE VERFAHREN ZUM BESCHICHTEN EINER FASER**
DEVICE FOR COATING A FIBRE, AND METHOD FOR COATING A FIBRE
DISPOSITIF DE REVÊTEMENT D'UNE FIBRE ET PROCÉDÉ DE REVÊTEMENT D'UNE FIBRE

(30) Priorität: 05.01.2016 DE 102016100144
(43) Veröffentlichungstag der Anmeldung: 12.07.2017
(73) Patentinhaber: J-Fiber GmbH, 07751 Jena (DE)
(72) Erfinder: Rosenkranz, Jürgen, 07745 Jena (DE); Hanf, Robert, 07607 Eisenberg (DE); Brehm, Lothar, 07743 Jena (DE)
(74) Vertreter: Weidner Stern Jeschke

(56) Entgegenhaltungen:
- EP-A1- 1 138 642
- EP-A1- 2 792 422
- WO-A1-97/28195
- WO-A1-2010/077132
- WO-A2-2008/034810
- US-A- 4 125 644
- US-B1- 6 338 878

## Beschreibung

Die Erfindung betrifft eine Vorrichtung zum Beschichten einer Faser mit einer Faseraufnahmeeinrichtung und einer Beschichtungseinrichtung, welche eine Aufbringeinheit zum Benetzen der Faser mit einem Beschichtungsmittel und einer zur Aufbringeinheit nachgeordneten Aushärteeinheit (im Weiteren auch als Härtungseinheit bezeichnet)zum optischen Aushärten des Beschichtungsmittels aufweist, wobei der Faseraufnahmeeinrichtung und der Aufbringeinheit mittels einer Translationseinrichtung in einer Längsrichtung der Faser eine Relativbewegung zueinander aufprägbar ist, sodass das Benetzen im Wesentlichen entlang der gesamten Faser realisiert ist und die Härtungseinheit ein Leuchtmittel zum Aussenden wenigstens eines Lichtstrahls aufweist, wobei der wenigstens eine Lichtstrahl direkt oder indirekt auf eine Oberfläche der Faser gerichtet ist sowie ein Verfahren zum Herstellen einer beschichteten Faser und eine Faser.

Das Aushärten von Überzügen auf Fasern mittels elektromagnetischer Strahlung ist seit langem bekannt. Insbesondere wird bei der Herstellung von Glasfasern mit UV-Strahlung das die Faser schützende Coating ausgehärtet. Um die Aushärtung möglichst optimal zu gestalten sind dem Fachmann folgende Verfahren und Vorrichtungen bekannt.

In der US2011147356A wird ein LED-Array verwendet, dessen Strahlung mittels Zylinderlinse auf die Faser fokussiert wird. Auf der Gegenseite des LED-Arrays ist ein Reflektor angebracht um eine homogene und effiziente Bestrahlung zu ermöglichen. Die Idee einer Zylinderlinse mit einem Reflektor zu kombinieren kann der Fachmann auch der US7022382B1 entnehmen.

In der US2011287195A wird eine Anordnung beschrieben, bei der LEDs innerhalb eines die Faser schützenden Rohres angeordnet sind und das Rohr elliptisch ausgeformt und mit einer Beschichtung versehen ist, um eine Fokussierung auf die Faser zu erreichen.

In der US4591724 wird ein elliptischer Reflektor in Kombination mit einer Luftkühlung beschrieben.

Die US2013068969 lehrt dem Fachmann durch den Einsatz von zwei elliptischen Reflektoren ein homogeneres Belichten und damit Aushärten des Coatings zu erreichen.

Der US 2004135159A kann der Fachmann entnehmen, dass mehrere LEDs zu einem Panel zusammengefasst werden können und dass durch verschiedene Wellenlängen und eine mögliche Relativbewegung zwischen Faser und LED-Array die Bildung von Hot-Spots verhindert wird.

Das Aushärten einer Beschichtung unter Verwendung von verschiedenen Wellenlängen wird auch in der US2013228707A beschrieben. Ähnliche Anregungen entnimmt der Fachmann der US2012009358A, in der ein Aushärten mit verschiedenen Wellenlängen beschrieben wird. Daneben wird in dieser Druckschrift erwähnt, dass durch bestimmte Bereiche, in denen keine Bestrahlung stattfindet, das Coating auskühlen kann und damit entlastet wird.

In der US2012040105A wird ein Verfahren offengelegt, bei dem mit einer Reihe von LED-Arrays die Aushärtung vorgenommen wird. Dabei wird die Leistung der Einzel-LEDs variiert, wobei die Gesamtleistung mit der das Coating ausgehärtet wird konstant gehalten wird. Insbesondere wird die Intensität der LEDs in Abhängigkeit der Ziehgeschwindigkeit verändert.

In der EP2792422A wird eine Vorrichtung beschrieben, die auf Reflektoren zur homogenen Bestrahlung verzichtet. Es werden mehrere LED-Panels verwendet, die umlaufend um die Faser angeordnet sind und somit für eine homogene Bestrahlung sorgen. Daneben kann durch das Entfallen eines Reflektors und der Notwendigkeit die Strahlungsquellen in dessen Fokus zu positionieren, das LED-Panel deutlich näher an die Faser herangeführt werden, woraus sich eine verbesserte Aushärtung ergibt.

In der US2003039749A wird beschrieben, dass ein Abstand zwischen den einzelnen Strahlungsquellen während des Aushärtens vorteilhaft ist, wodurch das Coating weniger stark belastet wird und das Aushärten bei einer optimalen Aushärtungstemperatur erfolgen kann. Dadurch werden die Eigenschaften des Coatings verbessert.

Um die Strahlung der Strahlungsquellen effizienter zu nutzen, wird in der US2004090794A eine Vorrichtung beschrieben, mit der die Strahlung geformt und dann in eine Faser eingekoppelt wird. Damit lässt sich die Intensität der Strahlung zum Aushärten erhöhen.

Die CN103319100A zeigt die Vorteile einer Aushärtung mit einer LED als Strahlungsquelle auf, da dabei eine erhöhte Energieeffizienz, eine längere Lampenlebensdauer und eine geringere thermische Belastung zu erreichen ist.

Die US 4,125,644 A offenbart ein Verfahren zum Herstellen einer Beschichtung auf einer optischen Glasfaser, bei dem die beschichtete Faser zwischen zwei beidseitig angeordnete UV-Lampen bewegt wird.

In der US2010183821A (WO 2010/077132 A1) wird eine Vorrichtung beschrieben, bei der LED/Reflektor Paare in einer Helixstruktur um die Faser herum angeordnet sind. Daneben sind die LEDs mit einer semitransparenten Schicht versehen, welche in der Lage ist, nicht vom Coating absorbiertes Licht zu reflektieren.

Die WO 2008/034810 A2 offenbart eine Beschichtungsvorrichtung für eine senkrecht angeordnete Flexodruckhülse mit einer verschiebbaren Beschichtungseinheit und Bestrahlungseinheit, wobei in der Bestrahlungseinheit LEDs im Fokuspunkt innerhalb einer konisch reflektierenden Aushöhlung einer Kollimatorbasis angeordnet sind.

In der US 6,338,878 B1 wird ein Verfahren zur Beschleunigung des Aushärtens einer Beschichtung auf einer optischen Faser durch aktives Entfernen der Wärme aufgrund der exothermen Aushärtungsreaktionen während einer UV-Bestrahlung beschrieben, bei welchem die optische Faser im Fokuspunkt eines halbelliptischen Reflektors zwischen zwei Quarzplatten und die UV-Lichtquelle ebenfalls im Fokuspunkt eines zweiten halbelliptischen Reflektors angeordnet sind.

Die WO 97/28195 A1 beschreibt ein Verfahren zum Herstellen einer kontinuierlich isolierenden Hülle einer Glasfaser, wobei die Hülle durch ein aushärtbares Beschichtungsharz geführt wird und anschließend das Aushärten mittels einer UV-Lichtquelle innerhalb einer kreisförmigen spiegelnden Kammer erfolgt.

Die im Stand der Technik verwendeten Lösungen basieren auf einer oder mehreren Strahlungsquellen, deren Strahlung sich senkrecht zur Bewegungsrichtung der Faser ausbreitet. Diese Strahlung wird zur Steigerung der Effizienz mit einer optischen Vorrichtung konzentriert und in einem Punkt auf der Faser fokussiert.

Weiterhin befindet sich zwischen Faser und Strahlungsquelle häufig ein Schutzrohr, das mit einem Fluid gespült werden kann um einerseits Faser und/oder Strahlungsquelle zu kühlen und andererseits die Verunreinigungen, die beim Aushärten des Überzuges entstehen, von der Strahlungsquelle fern zu halten. Daraus ergibt sich eine Reihe von Nachteilen.

Durch die senkrechte Abstrahlrichtung wird ein Großteil der Lichtintensität in einem Punkt (oder zumindest kleinen Abschnitt der Faser) gebündelt, so dass dort eine hohe Belastung auftritt. Durch die einseitige Bestrahlung wird ein ungleichmäßiges Aushärten des Coatings verursacht.

Weiterhin muss die Strahlung durch die Anordnung von Strahlungsquelle und Schutzrohr durch das Schutzrohr geführt werden, was zu Verlusten führt, insbesondere wenn die Schutzrohre im Verlauf des Faserzuges verschmutzen.

Der Ein- und Ausbau der Schutzrohre ist aufwändig, da sich die Schutzrohre zwischen Faser und Strahlungsquelle befinden und somit aus dem Zwischenraum Strahlungsquelle Faser ein- und ausgefädelt werden müssen um Beschädigungen der Strahlungsquellen zu vermeiden.

Außerdem müssen die Strahlungsquellen nahe an der Faser positioniert werden, wodurch wiederum erhöhte Anforderungen an die Gasspülung, gestellt werden und die Packungsdichte der LEDs nicht beliebig erhöht werden kann.

Aufgabe der Erfindung ist es den Stand der Technik zu verbessern, insbesondere ist es Aufgabe der Erfindung eine Vorrichtung zu schaffen, bei der der Abstand zwischen einer Leuchtdiode und einer Faser erhöht, sodass der Ein- und Ausbau von Strahlungsquellen, wie der Leuchtdiode erleichtert und die abgestrahlte Leistung der Strahlungsquelle auf einen größeren Faserabschnitt abgebildet werden kann. Gelöst wird die Aufgabe durch eine Vorrichtung zum Beschichten einer Faser mit einer Faseraufnahmeeinrichtung und einer Beschichtungseinrichtung, welche eine Aufbringeinheit zum Benetzen der Faser mit einem Beschichtungsmittel und einer zur Aufbringeinheit nachgeordneten Aushärteeinheit zum optischen Aushärten des Beschichtungsmittels aufweist, wobei der Faseraufnahmeeinrichtung und der Aufbringeinheit mittels einer Translationseinrichtung in einer Längsrichtung der Faser eine Relativbewegung zueinander beaufschlagbar ist, sodass das Benetzen im Wesentlichen entlang der gesamten Faser realisierbar ist und die Aushärteeinheit ein Leuchtmittel zum Aussenden wenigstens eines Lichtstrahls aufweist, wobei der Lichtstrahl direkt oder indirekt auf eine Oberfläche der Faser gerichtet ist und eine Hauptstrahlrichtung des Leuchtmittels einen Strahlwinkel α zwischen der Hauptstrahlrichtung und der Längsrichtung der Faser < 40°, < 30°, < 22°, < 12° oder < 8° aufweist oder die Hauptstrahlrichtung und die Längsrichtung parallel zueinander sind, und die Aushärteeinheit ein optisches Element aufweist, welches in einem Strahlengang des Leuchtmittels angeordnet ist, sodass eine Translation, eine Brechung, eine Beugung, eine Fokussierung und/oder eine Reflexion des Lichtstrahls realisierbar ist, wobei das optische Element ein Reflektor, eine optische Linse, ein optisches Gitter und/oder ein Polarisationsfilter aufweist, wobei der Reflektor eine konische Form aufweist, welche sich entlang der Längsrichtung der Faser verjüngt oder aufweitet.

Somit kann zum einen der Ein- und Ausbau von Leuchtmitteln wie beispielsweise LEDs erleichtert werden. Zum anderen kann die durch das Leuchtmittel aufgebrachte Wärmeleistung über einen weiteren Bereich der in Längsrichtung ausgedehnten Faser aufgeprägt werden, da sich beispielsweise der Fokus der Lichtquelle und/oder ein Lichtstrahl der Lichtquelle zumindest teilweise entlang der Längsrichtung der Faser erstreckt. Somit wird die Faser, insbesondere die aufgebrachte und aushärtende Umhüllung (auch als "Coating" bezeichnet), durch die Leuchtmittel weniger stark erwärmt. Alternativ kann mit einer erhöhten Gesamtintensität gearbeitet werden, so dass die Dauer der Aushärtung reduziert werden kann. Dadurch kann insbesondere eine erhöhte Ziehgeschwindigkeit der Faser realisiert werden.

Zudem kann ein gleichmäßigeres Bestrahlen auf die Oberfläche der Faser gewährleistet werden, wodurch sich ein homogeneres Ausbilden der Schutzschicht durch das ausgehärtete Beschichtungsmittel einstellt. Weiterhin können insgesamt kompaktere Anlagen bereitgestellt werden, da durch die Anordnung der Leuchtmittel, wobei das Leuchtmittel vom Reflektor beabstandet ist, beispielsweise oberhalb des Reflektors und insbesondere im gut zugänglichen Bereich zwischen der Faseraufnahmeeinrichtung und der Beschichtungseinrichtung angebracht wird, ein weniger komplexer Aufbau der kompletten Ziehanlage notwendig ist.

Folgendes Begriffliche sei erläutert.

Unter einer "Faser" wird im Allgemeinen ein im Verhältnis zu seiner Länge dünnes und insbesondere flexibles Gebilde verstanden. Dieses Gebilde kann beispielsweise aus einem Faserstoff bestehen. Vorliegend weist eine Faser mindestens ein Verhältnis von Länge zu Durchmesser von 3:1 oder von 10:1, 1000:1 oder gar 1000000:1 vor. Insbesondere umfassen die Fasern ein oder mehrere Gebilde aus Glasfasern, textile Fasern und/oder metallische Fasern, welche auch als Drähte oder Bleche bezeichnet werden können. Zudem kann die Faser sowohl eine kreisförmige, ovalförmige, quadratische oder rechteckige oder sonstige geometrische Querschnittsflächenform aufweisen. Insbesondere für den Fall, dass eine Glasfaser eingesetzt wird, kann vorliegende Vorrichtung zusätzlich die Faser beispielsweise durch Ziehen herstellen.

Unter einem "Beschichten" wird auch Umhüllung ("Coating") verstanden. Insbesondere sind Fertigungsverfahren nach DIN 8580 mitumfasst, welche das Beschichten umfassen. Dabei kann eine festhaftende Schicht aus formlosem Stoff auf die Oberfläche der Faser aufgebracht werden. Dabei wird der Vorgang des Aufbringens der (Schutz-) Schicht selbst als Beschichtung bezeichnet. Insbesondere kann bei der Beschichtung eine einzige dünne Schicht oder eine dicke Schicht aufgetragen werden. Auch können mehrere zusammenhängende Schichten realisiert werden. Vorliegend sind insbesondere Beschichtungsverfahren mitumfasst, bei denen aufgrund von Aufbringen von Licht auf das Beschichtungsmittel sich die feste Beschichtung ausbildet.

Als "Beschichtungsmittel" können sowohl flüssige, gelöste oder feste Stoffe wie beispielsweise Pulver verwendet werden. Zudem kann das Beschichtungsmittel auf unterschiedliche Wellenlängen mit einem Unterschiedlichen Grad des Vernetzens reagieren, wobei sich jeweils die Beschichtung ausbildet.

Die "Faseraufnahmeeinrichtung" ist insbesondere die Einrichtung, in welcher die Faser eingelegt oder gespannt ist. Insbesondere kann dabei die Faser frei geführt werden, sodass insbesondere die Faser vollumfänglich beispielsweise mit dem Beschichtungsmittel behandelbar ist. Insbesondere kann beispielsweise durch eine Düse oder durch mehrere Düsen das Beschichtungsmittel auf die Faser in den frei gespannten Bereich aufgebracht werden. Mithin kann beispielsweise die Faseraufnahmeeinrichtung Rollen umfassen, auf welche die Faser auf- oder abgespult wird. Für die Herstellung und Beschichtung von Glasfasern, bevorzugt Quarzglasfasern, umfasst die Faseraufnahmevorrichtung insbesondere eine Halterung, in der eine Vorform/Preform gehalten wird. Weiterhin kann eine Wärmequelle vorgesehen sein, welche zumindest einen Teil der Preform so stark erwärmt, dass das Material eine derart niedrige Viskosität aufweist, dass durch die Schwerkraft ein Tropfen gebildet wird. Dieser kann frei geführt und dabei beschichtet werden, bevor er im weiteren Teil der Faseraufnahmeeinrichtung über eine Aufwickeleinheit, die in der Regel aus einer Reihe von Rollen besteht, auf eine Spule aufgewickelt wird. Es ist dabei in einer weiteren Ausführungsform möglich, den erwärmten Teil der Preform durch eine mechanische Vorrichtung abzuziehen und somit das Abtropfen zu unterstützen. Das ist insbesondere dann vorteilhaft, wenn der finale Faserdurchmesser einen Wert von 600 µm übersteigt.

Die "Beschichtungseinrichtung" ist die Einheit, welche das Beschichten realisiert. Wie bereits erläutert, kann diese Düsen umfassen, welche das eigentliche Beschichtungsmittel auf die Faser aufbringen. In diesem Fall wird vorliegend insbesondere für das Aufbringen des Beschichtungsmittels von einer "Aufbringeinheit" gesprochen.

Sowohl direkt beim Aufbringen selbst als auch an einem nachgelagerten Ort, kann das eigentliche Härten oder entsprechende Aushärten durch eine "Härtungseinheit" erfolgen. Dabei sei angemerkt, dass der Begriff "nachgeordnet" sowohl als örtlich nachgeordnet als auch zeitlich nachgeordnet verstanden werden kann.

Dabei umfasst die "Härtungseinheit" ein "Leuchtmittel", welches das "optische Härten" des aufgebrachten Beschichtungsmittels bewirkt. Dabei kommen bevorzugt Leuchtmittel zum Einsatz, welche eine Wellenlänge unterhalb von 400 nm aussenden. Auch können spektral breite Leuchtmittel wie beispielsweise Weißlicht-LEDs eingesetzt werden. Dies bietet den Vorteil, dass mit ein und demselben Leuchtmittel unterschiedliche Beschichtungsmittel eingesetzt oder bei unterschiedlichen Wellenlängen das Vernetzen der die Schutzschicht ausbildenden Moleküle bewirkt werden kann.

Unter einem "Benetzen" der Faser wird insbesondere der Vorgang verstanden, dass das eigentliche Beschichtungsmittel auf der Faser angehaftet wird.

Damit die Faser im Wesentlichen über ihre gesamte Längsausdehnung mit einer Schutzschicht versehen werden kann, kann die Vorrichtung eine Translationseinrichtung aufweisen. Diese "Translationseinrichtung" kann im Wesentlichen mittels zweier Alternativen realisiert werden. In der ersten Alternative wird die Beschichtungseinrichtung und insbesondere die Aufbringeinheit im Bezug zu der Faser entlang der Längsrichtung der Faser verschoben. In der zweiten Alternative, welche sich besonders bevorzugt bei optischen oder textilen Fasern realisieren lässt, kann die Faser selbst sich in Bezug zur Aufbringeinheit in Längsrichtung bewegen. Dies kann beispielsweise beim Aufrollen oder Abspulen der Faser von einer Rolle und ein Durchführen durch die Aufbringeinheit realisiert werden. Selbstverständlich sind auch Kombinationen der beiden Alternativen realisierbar.

Als "Leuchtmittel" werden vorliegend insbesondere gerichtete Leuchtmittel wie beispielsweise LEDs (light-emitting diode) verwendet. Selbstverständlich können auch Laser oder mit Blenden versehene Leuchtmittel anderer Geometrie verwendet werden. Der Einsatz von LEDs ist besonders vorteilhaft, da diese zum einen sehr langlebig und zum anderen sehr energieeffizient sind. Weiterhin ist es vorteilhaft LEDs einzusetzen, da diese über Strahlgeometrien verfügen, die beispielsweise keulenförmig sind und somit schon inhärent eine gewisse Verteilung der Intensität auf der Faseroberfläche realisieren können.

Unter einem "direkten" Richten des Lichtstrahls wird insbesondere verstanden, wenn der Lichtstrahl im Wesentlichen ungehindert nach dem Aussenden aus dem Leuchtmittel auf die Faser aufgebracht wird.

Unter einem "indirekten" Richten des Lichtstrahls wird beispielsweise verstanden, dass nach dem Aussenden aus dem Leuchtmittel der Lichtstrahl durch optische Elemente ablenkt oder verändert wird.

Unter einer "Hauptstrahlrichtung" wird insbesondere die Richtung des Lichtstrahls verstanden, in welche direkt nach dem Leuchtmittel der Lichtstrahl ausgesandt wird, sodass entlang dieser Richtung im Allgemeinen die größte Intensität des Lichtstrahls vorherrscht. Bei einem idealen punktförmigen Leuchtmittel ist das eine gedachte Gerade von dem Leuchtmittel zum Fokus.

Ein "Strahlwinkel α" ist insbesondere der kleinste Winkel, welcher zwischen der Hauptstrahlrichtung und der Längsrichtung der Faser ausgebildet wird. Vorliegend wird beim Gradmaß ein Vollwinkel von 360° zu Grunde gelegt.

Die Vorrichtung weist ein optisches Element auf, welches in einem Strahl entlang des Leuchtmittels angeordnet ist, sodass eine Translation, eine Brechung, eine Beugung, eine Fokussierung und/oder eine Reflektion des Lichtstrahls realisierbar ist.

Somit können unterschiedlichste Realisierungen des direkten oder indirekten Richtens des Lichtstrahls auf die Oberfläche der benetzten Faser realisiert werden. Dabei umfasst eine Translation insbesondere einen Lichtstrahlrichtungsversatz, eine Brechung, insbesondere ein wellenlängenabhängiges Ablenken eines Lichtstrahls. Eine "Beugung" eine durch beispielsweise Blenden realisierte spezielle Verteilung der ausgesandten Lichtstrahle und eine "Fokussierung", wie sie beispielsweise durch Linsen oder Spiegel realisierbar sind. Selbstverständlich sind auch Reflektionen und mithin Transmissionen des Lichts realisierbar.

Als optische Elemente können insbesondere Reflektoren, optische Linsen, optische Gitter und/oder Polarisationsfilter separat oder in Kombination eingesetzt werden. Auch andere optische Elemente wie sie beispielsweise bei einer LCD- (liquid crystal display) Maske realisierbar sind, sind mitumfasst.

Um die Faser rundherum mit dem ausgesandten Licht bestrahlen zu können, kann die Vorrichtung derart eingerichtet sein, dass die Faser durch das optische Element geführt ist.

Beispielsweise kann insbesondere bei einer Glasfaser ein Reflektor einen Reflektoreingang und einen Reflektorausgang aufweisen, durch welchen hindurch die Faser anfänglich gezogen wird und anschließend beispielsweise über eine nachgelagerte Rolle aufgewickelt wird. Ähnlich kann dies bei einer Linse sein, welche mittig ein Loch aufweist, durch das die Faser geführt ist.

In einer weiteren Ausführungsform ist die Vorrichtung derart eingerichtet, dass eine Intensität und/oder eine Wellenlänge des Lichtstrahls mittels des optischen Elements in Längsrichtung homogen und/oder inhomogen entlang der Faser auf der Oberfläche der Faser aufprägbar ist.

So kann beispielsweise eine Zylinderlinse eingesetzt werden, welche eine punktförmige Lichtquelle in eine linienförmige Lichtquelle umwandelt. Dabei kann diese Linienform seitlich entlang der Faser aufgebracht werden, wodurch sich eine beispielsweise unterschiedlich abnehmende oder zunehmende Intensität entlang der Faser ausbildet. Ähnliches kann beispielsweise mit einem Reflektor realisiert werden. Auch kann beispielsweise, wenn zwei Beschichtungsmittel auf der Faser aufgebracht sind, die tiefere Schicht mit einer anderen Wellenlängen als die obere Schicht beaufschlagt werden.

Besonders vorteilhaft hat sich der Einsatz eines innenbeschichteten Reflektors gezeigt, durch welchen die Faser geführt wird. Dabei kann der Reflektor eine konische Form aufweisen, welche sich entlang der Längsrichtung der Faser verjüngt oder aufweitet.

Somit kann insbesondere über die gesamte Reflektorlänge hinweg der benetzten Faser Licht zum Aushärten aufgeprägt werden.

In einer weiteren Ausführungsform weist das Leuchtmittel mehrere Leuchtquellen, insbesondere LEDs (light-emitting diodes) auf.

Um verdampftes Beschichtungsmittel nicht mit einer Innenbeschichtung des Reflektors reagieren zu lassen oder um insbesondere oxidative Prozesse in der Schutzschicht der Faser zu verhindern, kann eine Begasungseinrichtung vorgesehen sein, welcher ein Schutzgas zugeordnet ist und welche im Wesentlichen in einem Bereich der Faser angeordnet ist, in dem der Lichtstrahl auf die Oberfläche der Faser trifft. Dabei kann eine Schutzgasatmosphäre realisiert vorgesehen werden. Die Begasungseinrichtung kann dabei entweder Schutzgas mit Überdruck in den Reflektor einbringen, oder mit Unterdruck das Schutzgas aus dem Reflektor absaugen. Besonders vorteilhaft ist eine Kombination, bei der am unteren Ende des Reflektors das Schutzgas mit Überdruck eingebracht und am oberen Ende mit Unterdruck abgesaugt wird.

Besonders vorteilhaft hat sich herausgestellt, wenn die Begasungseinrichtung dem Reflektor zugeordnet ist, sodass im Innenbereich des Reflektors die Schutzgasatmosphäre etabliert ist. Beispielsweise können als Schutzgase Edelgase wie Argon oder inerte Gase wie Stickstoff eingesetzt werden.

In einer einfachen Ausführung wird während des Aushärtens die benetzte Faser permanent mit Schutzgas aus einer Düse beaufschlagt. Auch kann der gesamte Aushärtevorgang in einem Raum stattfinden, welcher gänzlich mit Schutzgas ausgefüllt ist.

Um mehrere unterschiedliche Schutzschichten der Faser aufzuprägen oder um den Aushärteprozess zu beschleunigen, kann die Vorrichtung zwei oder mehrere Aufbringeinheiten oder Härtungseinheiten aufweisen.

Um während des Beschichtungsprozess auf das optische Element einwirken zu können, kann dem optischen Element eine Verstelleinrichtung zugeordnet sein, sodass eine Translation, Rotation und/oder Kippung des optischen Elements in Bezug zu der Längsrichtung der Faser realisierbar ist. Dies kann beispielsweise dadurch realisiert werden, dass mittels Stellmotoren die entsprechenden Bewegungen realisiert werden.

In einem weiteren Aspekt wird die Aufgabe gelöst durch ein Verfahren zum Herstellen einer beschichteten Faser, insbesondere einer optischen Faser, mit einer zuvor beschriebenen Vorrichtung, wobei die Faser mit dem Beschichtungsmittel benetzt und anschließend mittels optischen Bestrahlens gehärtet wird.

Somit kann eine Faser, wie beispielsweise eine Textilfaser oder eine Glasfaser bereitgestellt werden, bei der eine definierte und beispielsweise homogene Schutzschicht aufgeprägt ist.

In einer diesbezüglichen Ausführungsform wird die Faser direkt mittels der Vorrichtung hergestellt, wobei die Preform vorab erwärmt und anschließend, insbesondere durch den Reflektor, gezogen wird.

Somit kann eine Faser bereitgestellt werden, welche nach einem zuvor beschriebenen Verfahren hergestellt wird.

Im Weiteren wird die Erfindung anhand von Ausführungsbeispielen näher erläutert. Es zeigen
- Figur 1: eine stark schematische Schnittdarstellung eines vertikalangeordneten Reflektors, durch welchen eine Glasfaser gezogen wird,
- Figur 2a,b: stark schematische Schnittdarstellungen alternativer Ausgestaltungen des Reflektors aus Figur 1,
- Figur 3: eine stark schematische Schnittdarstellung einer weiteren Alternative des Reflektors aus Figur 1 sowie
- Figur 4a,b: je ein stark abstrakt dargestellter Mehrfachreflektor.

Eine Glasfaser 101 ist vertikal durch einen innenbeschichteten Quarzreflektor 111 durch den Reflektoreingang 115 und durch den Reflektorausgang 117 in Faserzugrichtung 103 geführt. Das Ziehen der Glasfaser 101 erfolgt mit bekannten Vorrichtungen.

Vertikal oberhalb des innenbeschichteten Quarzreflektors 111 ist eine Aufsprüheinrichtung (nicht dargestellt), welche als Beschichtungseinrichtung fungiert, angeordnet, welche Düsen aufweist. Über diese Düsen wird der Glasfaser ein flüssiges Beschichtungsmittel aufgesprüht. Die Glasfaser 101 tritt im mit dem Beschichtungsmittel benetzen Zustand in den Reflektor 111 ein. Außerhalb und oberhalb des innenbeschichteten Quarzreflektors 101 sind kreisförmig schmalbandige oder breitbandige LEDs 105 angeordnet. Die LEDs emittieren, je nach Auswahl, den Spektralbereich von 200nm bis 2000nm oder 250nm bis 600nm oder 270nm bis 380nm. Alternativ werden auch mehrere LEDs mit verschiedenen Spektralbereichen kombiniert. Insbesondere werden die verwendeten LEDs derart gewählt, dass die unterschiedlichen Beschichtungsmittel ohne Wechsel der LEDs ausgehärtet werden.

Der innenbeschichtete Quarzreflektor 111 ist um die Faserzugrichtung 103 rotationssymmetrisch aufgebaut. Zudem weist der innenbeschichtete Quarzreflektor 111 eine eingangsseitige Quarzscheibe 113 auf. Ebenfalls über die Quarzscheibe wird in Öffnungen (nicht dargestellt), welche in den Innenbereich des innenbeschichteten Quarzreflektors 111 führen, permanent Argon eingeblasen, wobei das Argon über den Reflektorausgang 117 den innenbeschichteten Quarzreflektor wieder verlässt.

Die kreisförmig angeordneten breitbandigen LEDs 105 sind so angeordnet, dass in Lichtsenderichtung 107 deren Licht parallel zur Glasfaser 101 in den innenbeschichteten Quarzreflektor 111 eingekoppelt wird.

Die gradlinige Ausbreitung entlang der Lichtsenderichtung 107 des von den LED ausgesandten Lichtstrahls wird durch die Innenbeschichtung des Reflektors 111 abgelenkt und auf die Glasfaser 111 gerichtet.

Durch den UV-Anteil des Lichts der breitbandigen LEDs 105 wird im Innenraum des Reflektors 111 die mit flüssigem Beschichtungsmittel benetzte Glasfaser 101 gehärtet.

Sofern einer der LEDs ausgetauscht werden muss, kann diese nun außerhalb des Reflektors einfach ausgebaut und ersetzt werden. Ein Verschieben des Reflektors oder Auseinanderbauen des Reflektors 111 ist vorliegend nicht notwendig.

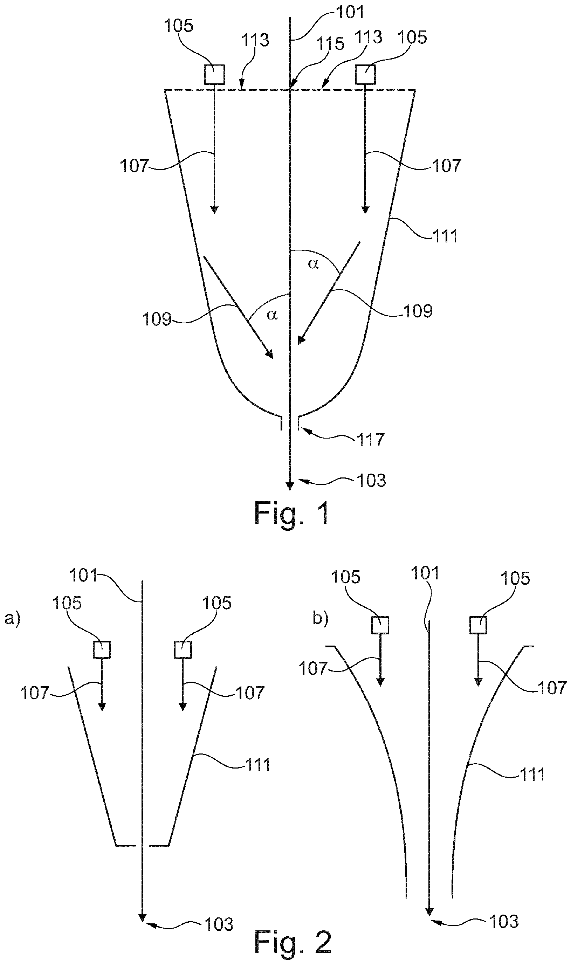

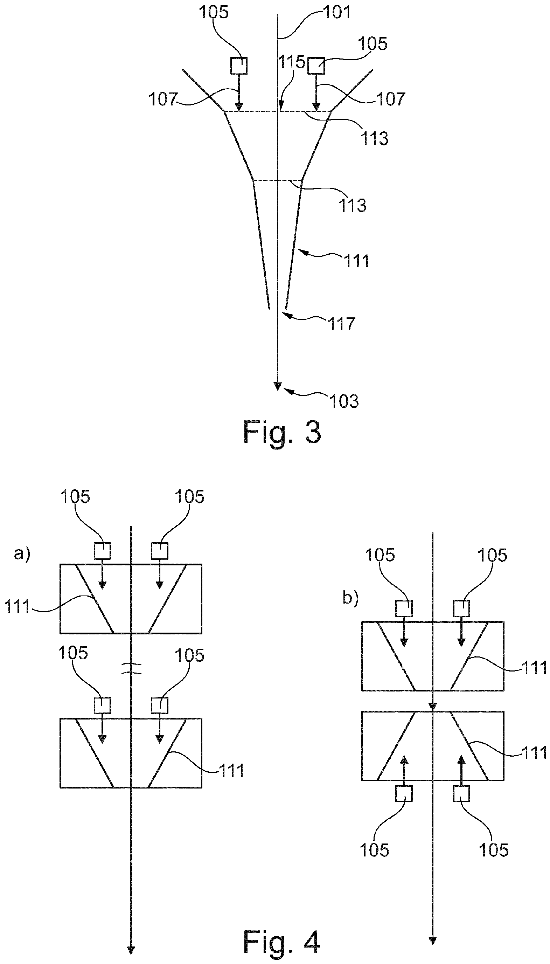

Der Reflektor 111 kann v-förmig (siehe Figur 2a) oder trichterförmig (siehe Figur 2b) ausgestaltet sein. Auch können aneinandergesetzte v-förmige Elemente den Reflektor 111 bilden (siehe Figur 3).

In einer Alternative wird die Glasfaser 101 oberhalb des Reflektors 111 zuerst mit einem ersten Beschichtungsmittel und direkt anschließend mit einem zweiten Beschichtungsmittel benetzt. Direkt vor den LEDs (zwischen den LEDs 105 und der Quarzscheibe 113) ist ein Prisma angeordnet. Dieses Prisma bricht die unterschiedlichen Bestandteile des durch die breitbandigen LEDs 105 ausgesandten Lichts und fokussiert diese über den Reflektor 111 über einen weiten Bereich des Innenraumes des Reflektors 111, sodass sich die beiden Beschichtungsmittel auf der Glasfaser 111 innerhalb des Reflektors 111 aushärten.

Weiterhin können anschließend wieder Beschichtungsdüsen und zugehörige Reflektoren jeweils mit zugehöriger LED-Breitbandquelle 105 angeordnet werden (siehe hierzu Figur 4a).

In einer weiteren Alternative sind zwei Reflektoren nacheinander angeordnet, wobei jeweils die zulaufenden Bestandteile der v-förmigen Reflektoren aufeinander zugerichtet sind.

## Patentansprüche

1. Vorrichtung zum Beschichten einer Faser (101) mit einer Faseraufnahmeeinrichtung und einer Beschichtungseinrichtung, welche eine Aufbringeinheit zum Benetzen der Faser mit einem Beschichtungsmittel und eine zur Aufbringeinheit nachgeordneten Aushärteeinheit zum optischen Aushärten des Beschichtungsmittels aufweist, wobei der Faseraufnahmeeinrichtung und der Aufbringeinheit mittels einer Translationseinrichtung in einer Längsrichtung (103) der Faser eine Relativbewegung zueinander aufprägbar ist, sodass das Benetzen im Wesentlichen entlang der gesamten Faser realisierbar ist und die Aushärteeinheit ein Leuchtmittel (105) zum Aussenden eines Lichtstrahls aufweist, wobei der Lichtstrahl direkt oder indirekt auf eine Oberfläche der Faser gerichtet ist und eine Hauptstrahlrichtung (107) des Leuchtmittels einen Strahlwinkel α zwischen der Hauptstrahlrichtung und der Längsrichtung der Faser kleiner 40°, kleiner 30°, kleiner 22°, kleiner 12° oder kleiner 8° aufweist oder die Hauptstrahlrichtung und die Längsrichtung parallel zueinander sind, und die Aushärteeinheit ein optisches Element (111) aufweist, welches in einem Strahlengang des Leuchtmittels angeordnet ist, sodass eine Translation, eine Brechung, eine Beugung, eine Fokussierung und/oder eine Reflexion des Lichtstrahls realisierbar ist, wobei das optische Element ein Reflektor, eine optische Linse, ein optisches Gitter und/oder ein Polarisationsfilter aufweist, **dadurch gekennzeichnet, dass** der Reflektor eine konische Form aufweist, welche sich entlang der Längsrichtung der Faser verjüngt oder aufweitet.

2. Vorrichtung nach Anspruch 1, **dadurch gekennzeichnet, dass** die Vorrichtung derart eingerichtet ist, dass die Faser durch das optische Element führbar ist.

3. Vorrichtung nach einem der vorherigen Ansprüche, **dadurch gekennzeichnet, dass** die Vorrichtung derart eingerichtet ist, dass eine Intensität und/oder eine Wellenlänge des Lichtstrahls mittels des optischen Elements in Längsrichtung homogen und/oder inhomogen entlang der Faser auf die Oberfläche der Faser aufprägbar ist.

4. Vorrichtung nach einem der vorherigen Ansprüche, **dadurch gekennzeichnet, dass** das Leuchtmittel mehrere Leuchtquellen, insbesondere LED (Light-Emitting-Diode), aufweist.

5. Vorrichtung nach einem der vorherigen Ansprüche, **gekennzeichnet durch** eine Begasungseinrichtung, welcher ein Schutzgas zugeordnet ist und welche im einem Bereich der Faser angeordnet ist, in dem der Lichtstrahl auf die Oberfläche der Faser trifft.

6. Vorrichtung nach Anspruch 5, **dadurch gekennzeichnet, dass** die Begasungseinrichtung dem Reflektor zugeordnet ist, sodass im Innenbereich des Reflektors eine Schutzgasatmosphäre ausbildbar ist.

7. Vorrichtung nach einem der vorherigen Ansprüche, **dadurch gekennzeichnet, dass** die Vorrichtung zwei oder mehr Aufbringeinheiten und/oder Aushärteeinheiten aufweist.

8. Vorrichtung nach einem der Ansprüche 2 bis 7, **dadurch gekennzeichnet, dass** dem optischen Element eine Verstelleinrichtung zugeordnet ist, sodass eine Translation, Rotation und/oder Kippung in Bezug zur Längsrichtung der Faser realisierbar ist.

9. Verfahren zum Herstellen einer beschichteten Faser, insbesondere einer optischen Faser, mit einer Vorrichtung nach einem der vorherigen Ansprüche, wobei die Faser mit dem Beschichtungsmittel benetzt und anschließend mittels optischen Bestrahlens gehärtet wird.

10. Verfahren nach Anspruch 9, wobei die Faser mittels der Vorrichtung hergestellt, insbesondere erwärmt und gezogen, wird.

## Claims

1. A device for coating a fiber (101) with a fiber receiving device and a coating device which has an application unit for wetting the fiber with a coating agent and a curing unit arranged downstream of the application unit for optically curing the coating agent, wherein a relative movement can be imparted to the fiber receiving device relative to the application unit by means of a translation device in a longitudinal direction (103) of the fiber, so that the wetting is realizable substantially along the entire fiber and the curing unit comprises a lamp (105) for emitting a light beam, wherein the light beam is directed directly or indirectly onto a surface of the fiber and a main beam direction (107) of the lamp has a beam angle a between the main beam direction and the longitudinal direction of the fiber of less than 40°, less than 30°, less than 22°, less than 12° or less than 8° or the main beam direction and the longitudinal direction are parallel to each other, and the curing unit has an optical element (111) which is arranged in a beam path of the lamp so that a translation, a refraction, a diffraction a focusing and/or a reflection of the light beam is realizable, wherein the optical element comprises a reflector, an optical lens, an optical grating and/or a polarization filter, **characterized in that** the reflector has a conical shape which tapers or widens along the longitudinal direction of the fiber.

2. The device according to claim 1, **characterized in that** the device is arranged in such a way that the fiber can be guided through the optical element.

3. The device according to one of the aforementioned claims, **characterized in that** the device is arranged in such a way that an intensity and/or a wavelength of the light beam can be impressed on the surface of the fiber by means of the optical element in a longitudinal direction homogeneously and/or inhomogeneously along the fiber.

4. The device according to one of the aforementioned claims, **characterized in that** the lamp has several light sources, in particular LED (Light-Emitting-Diode).

5. The device according to one of the aforementioned claims, **characterized by** a gassing device with which a protective gas is associated and which is arranged in an area of the fiber in which the light beam strikes the surface of the fiber.

6. The device according to claim 5, **characterized in that** the gassing device is associated with the reflector, so that a protective gas atmosphere can be formed in the inner area of the reflector.

7. The device according to one of the aforementioned claims, **characterized in that** the device comprises two or more application units and/or curing units.

8. The device according to one of the claims 2 to 7, **characterized in that** an adjusting arrangement is associated with the optical element so that a translation, rotation and/or ribbing can be realized in relation to the longitudinal direction of the fiber.

9. A method of manufacturing a coated fiber, in particular an optical fiber, with a device according to one of the aforementioned claims, wherein the fiber is wetted with the coating agent and subsequently cured by means of optical irradiation.

10. The method according to claim 9, wherein the fiber is produced, in particular heated and drawn, by means of the device.

## Revendications

1. Dispositif pour le revêtement d'une fibre (101), avec un dispositif de réception de la fibre et un dispositif de revêtement qui présente une unité d'application pour le mouillage de la fibre avec un agent de revêtement et une unité de durcissement, disposée en aval de l'unité d'application, pour le durcissement optique de l'agent de revêtement, où un mouvement relatif dans une direction longitudinale (103) de la fibre peut être imprimé au dispositif de réception de la fibre et à l'unité d'application au moyen d'un dispositif de translation, de sorte que le mouillage est réalisable sensiblement le long de toute la fibre et l'unité de durcissement comprend un luminaire (105) pour émettre un faisceau lumineux, où le faisceau lumineux est dirigé directement ou indirectement sur une surface de la fibre et une direction de faisceau principal (107) du luminaire présente un angle de faisceau a entre la direction de faisceau principal et la direction longitudinale de la fibre inférieur à 40°, a moins de 30°, moins de 22°, moins de 12° ou moins de 8° ou la direction du faisceau principal et la direction longitudinale sont parallèles entre elles, et l'unité de durcissement comporte un élément optique (111) qui est disposé dans un trajet de faisceau du luminaire de sorte qu'une translation, une réfraction, une diffraction une focalisation et/ou une réflexion du faisceau lumineux est réalisable, où l'élément optique comprend un réflecteur, une lentille optique, un réseau optique et/ou un filtre de polarisation, **caractérisé en ce que** le réflecteur présente une forme conique qui se rétrécit ou s'élargit dans la direction longitudinale de la fibre.

2. Dispositif selon la revendication 1, **caractérisé en ce que** le dispositif est disposé de telle sorte que la fibre peut être passée à travers l'élément optique.

3. Dispositif selon l'une des revendications précédentes, **caractérisé en ce que** le dispositif est disposé de telle manière qu'une intensité et/ou une longueur d'onde du faisceau lumineux peut être imprimée sur la surface de la fibre au moyen de l'élément optique dans une direction longitudinale de manière homogène et/ou non homogène le long de la fibre.

4. Dispositif selon l'une des revendications précédentes, **caractérisé en ce que** la source lumineuse comprend plusieurs sources lumineuses, en particulier des LED (Light-Emitting-Diode).

5. Dispositif selon l'une des revendications précédentes, **caractérisé par** un dispositif de gazage auquel est associé un gaz protecteur et qui est disposé dans une zone de la fibre dans laquelle le faisceau lumineux frappe la surface de la fibre.

6. Dispositif selon la revendication 5, **caractérisé en ce que** le dispositif de gazage est associé au réflecteur, de sorte qu'une atmosphère de gaz protecteur peut être formée dans la zone intérieure du réflecteur.

7. Dispositif selon l'une des revendications précédentes, **caractérisé en ce que** le dispositif comprend deux ou plusieurs unités d'application et/ou unités de durcissement.

8. Dispositif selon l'une des revendications 2 à 7, **caractérisé en ce qu'**un dispositif de réglage est associé à l'élément optique, de sorte qu'une translation, une rotation et/ou un nervurage peuvent être réalisés par rapport à la direction longitudinale de la fibre.

9. Procédé de fabrication d'une fibre revêtue, en particulier d'une fibre optique, avec un dispositif selon l'une des revendications précédentes, où la fibre est mouillée avec l'agent de revêtement et ensuite durcie au moyen d'une irradiation optique.

10. Procédé selon la revendication 9, où la fibre est produite, en particulier chauffée et étirée, au moyen du dispositif.
